# EUROPEAN PATENT APPLICATION

(11) **EP 4 190 535 A1**
(43) Date of publication of application: **07.06.2023**
(21) Application number: 21212024.0
(22) Date of filing: 02.12.2021
(51) Int. Cl.: B29C 64/112, B29C 64/393, B33Y 10/00, B33Y 50/02, B41J 2/045

(54) **SYSTEM AND METHOD FOR OPTICAL DROPLET ANALYSIS**

(71) Applicant: Quantica GmbH, 12555 Berlin (DE)
(72) Inventor: HARTKOPP, Ben, 12439 Berlin (DE); FÄRBER, Ludwig, 04179 Leipzig (DE)
(74) Representative: Vossius & Partner Patentanwälte Rechtsanwälte mbB

(57) **Abstract**

A method and system for optical droplet analysis for a 3D printhead. Wherein the system is comprising, a light emission unit configured to emit a collimated light beam, wherein the light beam is directed to essentially cross a flight path of a droplet ejected from the 3D printhead; a light detection unit positioned in the light beam at a position opposite to the light emission unit with regard to the flight path of the droplet, wherein the light detection unit is configured to directly detect an interference pattern caused by the droplet passing through the light beam in an area essentially corresponding to the cross-section of the light beam; and a processing unit configured to process the detected interference pattern in order to estimate at least one parameter of the droplet.

## Description

The invention relates to a method and system for optical droplet analysis. In particular, the invention relates to a method and system for optical droplet analysis for a 3D printing system, preferably of the inkjet type. The invention also relates to a system for optimization of a 3D printhead, and to a 3D printer.

In other words, the invention relates to an optical system for the evaluation of parameters such as a liquid material droplet size, droplet ejection performance, and positioning of the droplet ejected by a printhead. Furthermore, an evaluation of a position of a printhead may be performed.

In this description it is frequently referred to a "printhead". Such a printhead is described e.g. in EP 3 825 100 A1. All technical details of the printhead and the material ejection system of said application are herewith incorporated by reference. However, the method and system of the present invention is also suitable for any other printhead for liquid material droplets.

In general terms, from a printhead a droplet is ejected, more specifically the droplet is ejected from a material ejection unit, MEU, based on an electric control signal received from a controller. Typically, a plurality of MEUs, are provided in an array arrangement, typically a line arrangement. The printhead is provided in in a movable printhead carrier system.

A typical MEU has at least one ejection orifice, also referred to as a nozzle or opening, from which the droplet is ejected. The electric control signal controls an actuator, preferably a piezo actuator, thereby causing the droplet to be ejected through the orifice.

To optimize the performance of the printhead, multiple process parameters can be adapted. Said process parameters may include one or more of: electrical parameters of the control signal and/or positioning parameters of carrier systems.

It is an aspect of the present invention that some characteristics of the ejected droplet can be directly estimated based on a detected image of an interference pattern caused by the droplet in a laser beam. While an analysis of an interference pattern is known to the skilled person, it is a core aspect that this analysis can be simplified and still the resulting estimates are suitable as a feedback parameter for an optimization loop of the droplet ejection of a 3D printhead.

The detection of the interference pattern according to the invention is cost effective and fast, i.e. it can be performed at typical droplet ejection rates. A typical ejection rate during printing is 4.1 kHz. However, measurements are possible in a much broader range between about 100Hz and several 10 kHz or even higher.

Furthermore, it is another aspect of the present invention that an estimate can be calculated based on a quantitative analysis of the central interference minimum, also referred to a central shadow. This analysis has a low computational effort and can be computed on a drop by drop basis.

Still further, it is an aspect of the present invention that further information can be extracted from an analysis of the higher order interference patterns and/or bright spots detected in the interference pattern.

The latter analysis provides information on purity of the droplet and/or refractive index changes in the droplet. Furthermore, assuming circular shape of the droplet and a predetermined refractive index a y-directional displacement of the droplet can be estimated based on an outer bright ring of the detected pattern.

Measurable characteristics of a droplet may include the following: a negative or positive translation along a z-direction, along an x- and a y-direction. Measurable characteristics of a droplet may further include a shape of the droplet. Said shape may be more or less circular or non-circular, however, a circular shape is generally preferred. Measurable characteristics of a droplet may further include the droplet diameter. A size of roughly 10 to 130 microns (i.e., micrometer) is being preferred.

It is thus an object of the present invention to provide a system and method for characterization and/or optimization of one or more ejection orifices comprised in a printhead. Furthermore, the droplet ejection performance of said one or more orifices must be evaluated and preferably subsequently optimized via a controller unit. The optimization preferably restores an ejection performance of an ejection orifice, preferably to a predetermined threshold for optimal printing.

The above objects are achieved by the subject-matter of the independent claims. The dependent claims relate to further aspects of the invention. Any references in the following description to embodiments, objects, aspects and/or examples which are not covered by the appended claims are considered as not being part of the present invention.

According to an embodiment of the present invention, there is provided a system for optical droplet analysis for a 3D printhead, the system comprising, a light emission unit configured to emit a collimated light beam, wherein the light beam is directed to essentially cross a flight path of a droplet ejected from the 3D printhead; a light detection unit positioned in the light beam at a position opposite to the light emission unit with regard to the flight path of the droplet, wherein the light detection unit is configured to directly detect an interference pattern caused by the droplet passing through the light beam in an area essentially corresponding to the cross-section of the light beam; and a processing unit configured to process the detected interference pattern in order to estimate at least one parameter of the droplet.

It is another aspect of the present invention, that the processing unit is configured to estimate a center of the droplet based on a center of the central dark area of the interference pattern; that the processing unit is configured to estimate a diameter of the droplet based on a diameter of the central dark area of the interference pattern; and/or that the processing unit is configured to estimate a shape of the droplet based on a shape of the central dark area of the interference pattern.

It is another aspect of the present invention, that the processing unit is configured to estimate of at least one of the center position, the diameter, and the shape based on an analysis of higher order interference effects.

It is another aspect of the present invention, that light beam is a laser beam; wherein the laser beam has a wavelength between 550 nm to 750nm, preferably between 600 nm and 690 nm; wherein the laser beam has a diameter between 8 times and 170 times the droplet diameter; and/or wherein the laser beam has a beam parameter product between 0.22 and 0.31 mm mrad with an respective M² value between 1 and 1.3.

It is another aspect of the present invention, that the light detection unit is an array image sensor, preferably a CMOS image sensor, having a sensor area, wherein the light detection unit has dimensions essentially corresponding to the dimensions of the light beam at the position of the light detection unit, and/or wherein the light detection unit is configured to resolve a droplet in the size of an area of at least 0.015% of the sensor area.

It is another aspect of the present invention, that the light source and/or the light detection unit are operated in a pulsed mode and are synchronized to the droplet ejection and/or to each other in order to capture one image of a single droplet.

It is another aspect of the present invention, that at least one of the light emission unit and the light detection unit are mechanically referenceable against the 3D printhead; and/or wherein the processing unit is configured to calculate a position of the 3D printhead relative to the light beam center.

It is another aspect of the present invention, that the processing unit is configured to detect at least a central dark region in the detected interference pattern and to determine at least one of the center position, a diameter, and a shape of the central dark region; and that the detection is preferably based on an edge detection algorithm, more preferably based on canny edge detection operator.

According to an embodiment of the present invention, there is provided a system for optimization of a 3D printhead, comprising a 3D printhead with at least one adjustable ejection parameter and the system according to any one of the preceding embodiments and aspects of the invention and a controller unit, wherein the controller unit is configured to optimize the ejection parameter for a next droplet, preferably based on a predetermined target point, based on the determined droplet parameter of a past droplet.

According to an embodiment of the present invention, there is provided a method for optical droplet analysis comprising the steps of: operating a light emission unit to emit a collimated light beam, wherein the light beam is directed to essentially cross a flight path of a droplet ejected from a 3D printhead; directly detecting with a light detection unit an interference pattern caused by the droplet passing through the light beam in an area essentially corresponding to the cross-section of the light beam, wherein the light detection unit is positioned in the light beam at a position opposite to the light emission unit with regard to the flight path of the droplet; and processing with a processing unit the detected interference pattern in order to estimate at least one parameter of the droplet.

According to an embodiment of the present invention, there is provided a 3D Printer with a system according to any one of the preceding embodiments and aspects of the invention and configured to perform the method of the preceding embodiment of the invention.

### Brief description of the drawings

In the drawings:
- Fig. 1: shows an overview of a 3D printing system according to an embodiment of the invention;
- Fig. 2: shows an explosive view of an optical measurement system according to an embodiment of the invention;
- Fig. 3: shows a simplified explosive view of the optical measurement system according to an embodiment of the invention;
- Fig. 4: shows a side view of the optical measurement system according to an embodiment of the invention;
- Fig. 5a: shows a side view of the optical measurement system according to an embodiment of the invention with single droplets being ejected from the printhead;
- Fig. 5b: shows a side view of the optical measurement system according to an embodiment of the invention with a row of droplets being ejected from the printhead;
- Fig. 6: shows a light detection unit according to an embodiment of the invention in a closed state;
- Fig. 7: shows a light detection unit according to an embodiment of the invention in an open state;
- Fig. 8: shows a flow diagram of a measurement method according to an embodiment of the invention;
- Fig. 9: (the figure is split in two parts) shows a flow diagram of an optimization method according to an embodiment of the invention; and
- Figs. 10a to 10c: shows a time series of an explosive view of an optical measurement system according to an embodiment of the invention with a droplet above the light beam (a); the droplet in the light beam (b); and the droplet below the light beam (c).

### Detailed Description of the Drawings

In the following, embodiments of the present invention will be described. It is noted that some aspects of every described embodiment may also be found in some other embodiments unless otherwise stated or obvious to the skilled person. However, for increased intelligibility, each aspect will only be described in detail when first mentioned and any repeated description of the same aspect will be omitted.

In the present description it is frequently referred to positions, movements, and timing. It is apparent to the skilled person that any movement is to be understood as a relative movement and every timing is to be understood as a relative timing. Both the movement and the timing are relative to a reference position and timing, respectively.

The movement refers to the movement of the printhead in relation to a fixed position. Said fixed position may be a fixed position in a fixed space, e.g. the reference point on a generally stationary housing of the 3D printer. However, it may also be a fixed point in a moving space, e.g. a reference position on a building platform of the 3D-printer. In context of a performance optimization only a determination of a relative position and/or movement with respect to a predefined reference is relevant, because the optimization is performed based on a position difference.

The timing is even more relative, because a reference time-point, also referred to as "zero-time" can be freely defined. However, in context of the performance optimization only the determination of a relative timing is relevant, because the optimization is performed based on a timing difference.

In this application the translation is measured by referencing the center of the droplet to a predetermined zero position. In embodiments of the present invention the zero position is defined as the position of the crossing of the droplet path with a light-path of the optical drop analysis system described hereinbelow. Based on the zero-position also the zero time is defined as the time, when the droplet crosses the zero position. In a preferred embodiment the zero position is the center the of a laser beam with respect to the z-and x-directions.

According to the present invention droplet parameters are determined based on an analysis of an interference pattern observed when the droplet is in the laser beam. Since the dimensions of the laser beam and the droplet are similar, light deflected by the droplet interferes with the undeflected light. Behind (when seen from the laser source) the droplet an interference minimum, hereinafter also referred to as shadow, is observed.

The applicant has realized that this minimum can be treated as a being a shadow of the droplet. That is, the relative position with respect to the laser beam position corresponds to the relative position of the droplet and the shape of the minimum corresponds to the shape of the droplet. It is noted that the actual interference pattern may be complex and a physically and mathematically strict reconstruction of the droplet shape might not be possible from a 2D image of said interference.

However, the applicant has realized that the rough approximation based on an analysis of the position and shape of the shadow results in a measurement parameter suitable to provide a feedback in an optimization procedure for the printhead.

In some embodiments the shape may be determined based on a single measurement, i.e. measuring each droplet individually, or on multiple measurements, i.e. averaging over multiple measurements. A single droplet measurement is generally preferred.

The above-mentioned droplet parameter, e.g. shape, position, and timing, may be controlled via multiple control parameters. Each droplet parameter is linked to multiple control parameters and vice-versa. That is, the optimization of the droplet ejection is a multi-parameter problem. This will be apparent by the below description of adjustment of the z-position of a droplet.

In general, the adjustable ejection parameters on an individual nozzle basis comprise a control signal voltage, a control signal pulse width, a control signal frequency and a control signal pulse spacing. Further adjustable ejection parameters affecting a printhead are the material temperature and the internal pressure of the printhead.

For example, the z-directional displacement of a droplet may need to be adjusted. That is, the droplet is displaced with respect to the zero position, i.e. not placed in the central area of the laser beam at zero time To.

Further, the time of sending the control signal from a controlling unit for a droplet to be ejected by the printhead can be denoted as zero time minus one T₋₁, whereby the delta To - T₋₁ between T₋₁ and To denotes the length of time after which the laser should be pulsed after T₋₁, said time being denoted as the time of pulsing Tₚ in order to produce an image of the ejected droplet as it is positioned at a z-directional height, corresponding to the center of the laser beam.

Further the time of pulsing the laser beam Tₚ relative to the time delta between T₋₁ and T₀ being adjusted by analyzing the image detected on the optical sensor unit after a first measurement. At the first measurement a droplet shadow is being, at least partially, observed on the sensor during a pulsing of the laser and then a z-directional offset is calculated based on the shadow position being in relation to the center of the laser beam.

A subsequent ejection with a lower or higher time of pulsing Tp of the laser beam relative to delta T₋₁,T₀ will then produce a lesser or higher z-directional displacement of the droplet with respect to the center of the laser beam.

A shorter time of pulsing Tₚ than the time delta between T₋₁ and T₀ will lead to the shadow of the droplet appearing at a higher position above the center of the laser beam as compared to the previous measurement, and a longer time of pulsing Tₚ than the time delta T₋₁,T₀ will lead to the image of the droplet appearing at a lower position below the center of the laser beam as compared to the previous measurement. The time of pulsing the laser being adjusted through subsequent measurements until a droplet image can be measured at the center of the laser beam. The preferred pulse length of the laser is between 1 and 20 microseconds.

Alternatively, or additionally an adjustment can be made to the electrical control signal addressing one or more corresponding MEUs in the printhead. Specifically, the voltage applied to the actuator responsible for ejecting said droplet may be adjusted.

The voltage correlates to an ejection speed of the droplet, enabling positional control of said measured droplet in a z-direction. An increase in voltage generally results in increasing the ejection speed up to a maximum and then generally results in decreasing the ejection speed. An increase in ejection speed in turn lowers the position of the droplet with respect to the center of the laser beam due to an earlier arrival. A decrease of said voltage leads to the droplet being ejected with less speed under the maximum threshold and thus leads to a measured position that is higher with respect to the said laser beam due to a later arrival.

The droplet speed is further dependent on the pulse width of the control signal, with an increase in pulse width leading to a generally faster drop ejection up to a maximum and with a decrease of said pulse width below said maximum leading to a generally slower ejection of the droplet.

An increase in voltage and pulse width of the ejection control signal translates to a more substantial actuation, generally leading to the release of a larger droplet within a variety of thresholds, after which it may decrease, depending on rheological factors of the material ejected. A lower voltage and/or pulse width generally causes the inverse.

Furthermore the droplet may become non-circular or translated along an x- or a y-direction, if the droplet is released at a very high speed, due to a high voltage and or a long pulse width being applied leading to a breakup of the fluid thread in a so called wind induced manner as opposed to a desired Raleigh breakup.

Further, when excess material is present around the nozzle, it can also lead to a transferring of an impulse energy unevenly into the droplet, leading to the ejection of a non-circular droplet. A reduction in voltage or in pulse width, can restore a circular droplet shape, by timing the fluid thread breakup to transfer the energy into an ejected droplet evenly.

If a circular shape cannot be restored this way, a cleaning process can remove excess material surrounding the nozzle, thereby restoring its performance.

Further, a reduction in volume and speed can also be achieved by a variation of an internal pressure in the printhead, as it has an effect on the meniscus present in the nozzle opening, requiring more energy for a droplet release when the meniscus is positioned further in the capillary region of the nozzle.

As detailed above, the optimization of the droplet ejection is utterly complex, and a direct feedback is needed for optimization. According to the invention the ejection parameters are optimized based on an analysis of the shadow captured by the optical detection unit.

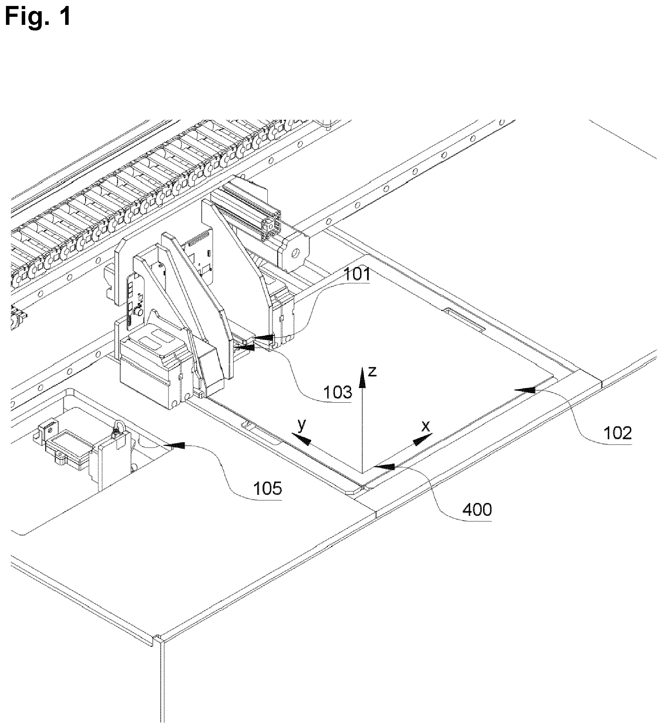

Fig. 1 shows an overview of a 3D printing system according to an embodiment of the invention. The printing system shown in Fig. 1 has a linear motion system facilitating the motion of a printhead carrier unit 101 with respect to a building platform 102 along a first primary direction, hereinafter x-direction.

Said building platform 102 is movable in relation to the printhead carrier 101 in a second primary direction, hereinafter y-direction, preferably via a second motion system. Said building platform 102 is further movable in relation to the printhead carrier 101 in a third primary direction, hereinafter z-direction, preferably via a ball-screw linear guided motion system.

The x-, y-, and z-directions are orthogonal with respect to each other. In other words, in an embodiment of a 3D printer system a printhead carrier unit 101 can be moved in a cartesian space 400 above the building platform 102.

It is noted that it is only relevant that the printhead carrier unit 101 can be moved in a space above the building platform relatively to the building platform 102. Depending on the embodiment, the platform 102 or the printhead carrier unit 101 may be stationary, or moveable in one, or two, or three directions.

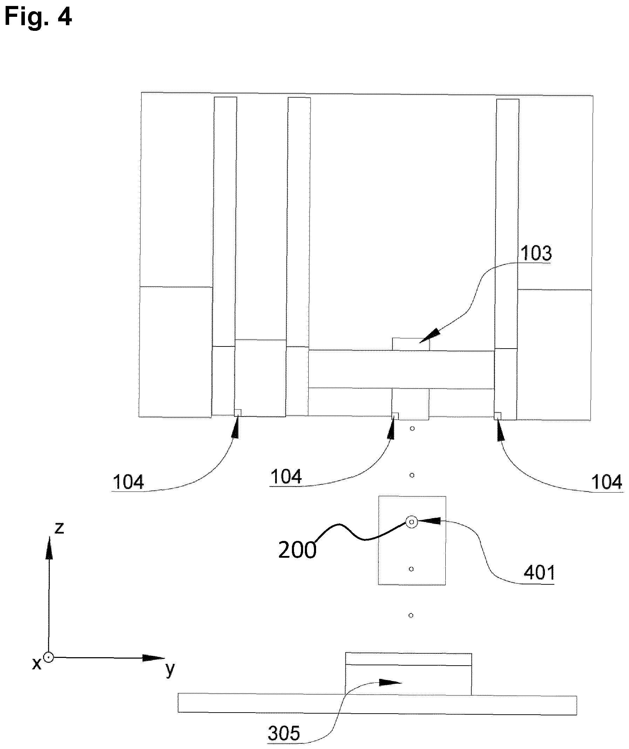

The carrier unit 101 preferably comprises one or more 3D printheads 103, said printheads 103 further each comprising one or more MEUs with one or more liquid material ejection orifices. Preferably the ejection orifices are arranged in a line array. The line array is preferably positioned orthogonally to the x-direction. The carrier unit 101 further has a referencing member 104 (see Fig. 4).

The reference member 104 serves to mechanically and/or electronically reference to position of the carrier unit, i.e. the actuator position, against the optical measurement system. In other words, the referencing member provides a reference between the measurement space defined by the beam position and the movement space of carrier unit, cf. the above discussion of relative positioning and timing.

In an embodiment of the invention the printhead 103 may be moved via with said printhead carrier unit 101 along said primary x-direction to an area corresponding to an external bay 105, outside of said cartesian space 400 above said building platform 102. The external bay 105 comprises an optical drop and printhead measurement system according to the invention.

In other words, the optical drop and printhead measurement system according to the invention is located in a space adjacent to the building space 400 above the building platform 102 of a 3D printer and the printhead may be moved to said adjacent space by means of the printhead carrier unit 101.

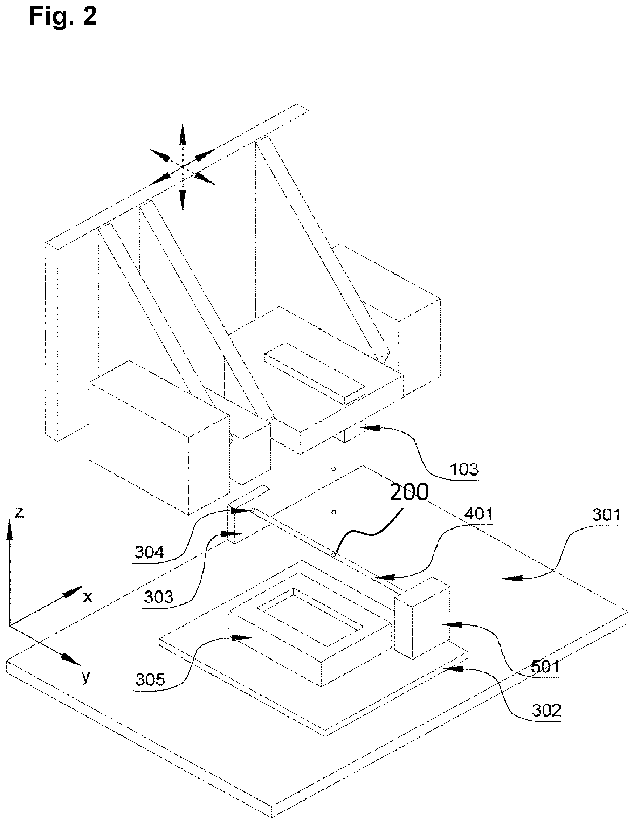

Fig. 2 shows an optical measurement system according to an embodiment of the invention. The optical measurement system according to the embodiment comprises a ground plate 301, preferably movable via a second linear guided motion system, preferably moveable in the z-direction with regard to the printhead carrier unit 101.

The optical measurement system according to the embodiment comprises a referencing plate 302 disposed on said movable ground plate 301.

The optical measurement system according to the embodiment further comprises a holding element 303, and a light emission unit 304, preferably a laser diode, provided to said holding element 303 and emitting a collimated light beam 401, preferably emitting orthogonally to the x-direction. Said light emission unit 304is functionally connected to an energy source and a control unit.

The optical measurement system according to the embodiment also comprises a material retention element 305, preferably oriented orthogonally to the x-direction and disposed on the referencing plate 302.

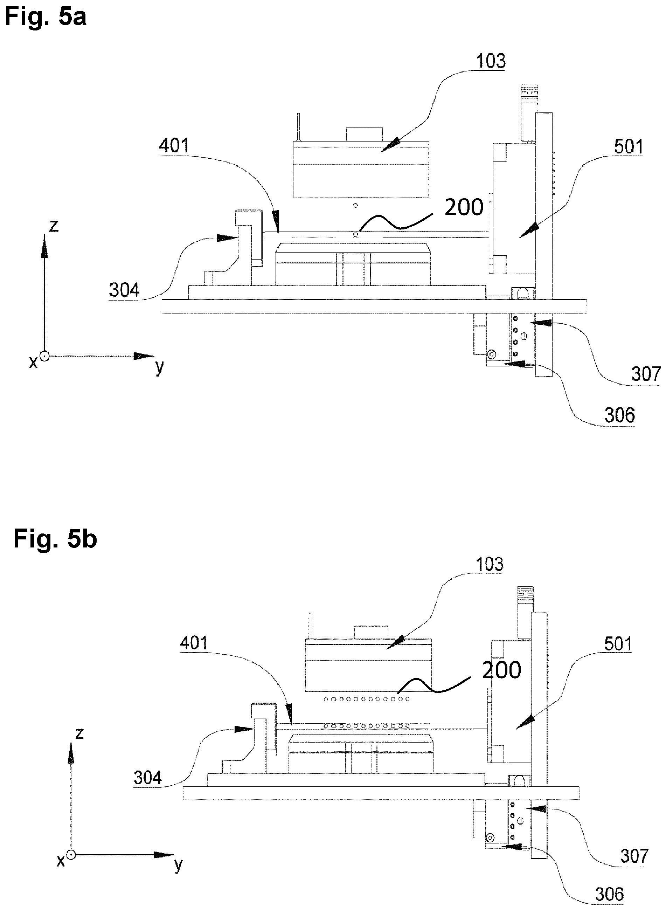

The optical measurement system according to the embodiment further comprises a sensor unit 501, connected to the reference plate 302, and is preferably movable via two orthogonally connected linear micro translation stages 306 and 307 (see Fig. 5) for enabling a precise adjustment of the sensor unit 501 along the x-direction and z-direction.

In other words, according to the invention the light emission unit generates a light beam. The light beam is directed towards the sensor unit. The light emission unit and the sensor unit are located such that the printhead can be moved into a space above the light beam in a z-direction and between the light source and the sensor unit such that, when the printhead is located in said space, the direction of the line of ejection orifices is the same direction as the light beam.

That is, droplets 200 ejected from the printhead traveling along the z direction will be illuminated by the light beam. The light beam is detectable by the sensor unit. The sensor unit is preferably further functionally connected to a power source and a control unit.

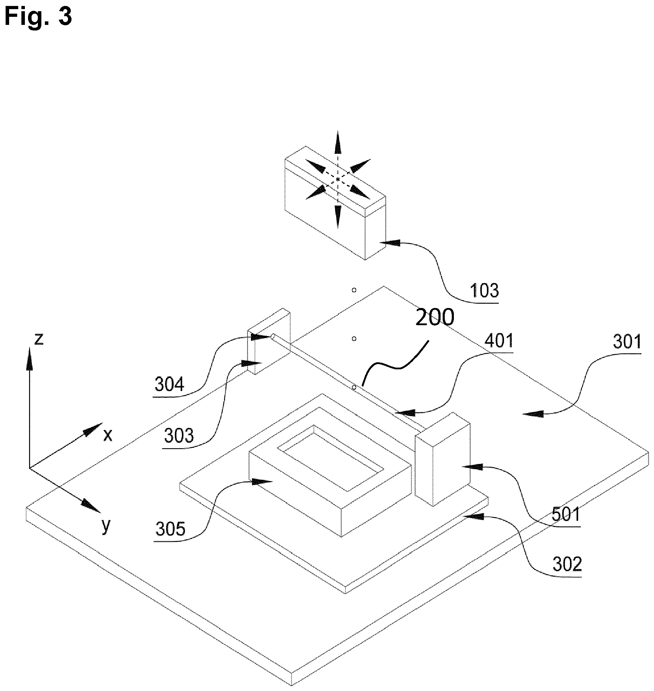

Fig. 3 shows a simplified explosive view of the optical measurement system according to an embodiment of the invention as shown in Fig. 2. The printhead 103 present in the printhead carrier unit 101 is shown in a position in which a measurement of one or more droplets 200, ejected out of the nozzle array, can be performed. For mere illustration purpose, the printhead 103 is shown without the printhead carrier unit 101 present and with the material ejection orifices line array in spatial alignment with the laser beam.

That is, the ejection orifices line array is situated principally above the laser beam in the z-direction and in alignment with the laser beam 401 in the x-y-plane.

Fig. 4 shows a side view of the optical measurement system according to an embodiment of the invention.

Fig. 5a shows a side view of the optical measurement system according to an embodiment of the invention with single droplets 200 being ejected from the printhead 103. It also shows the linear micro translation stages 306 and 307, and the sensor unit 501. Fig. 5b shows a side view of the optical measurement system according to an embodiment of the invention with a row of droplets 200 being ejected from the printhead 103.

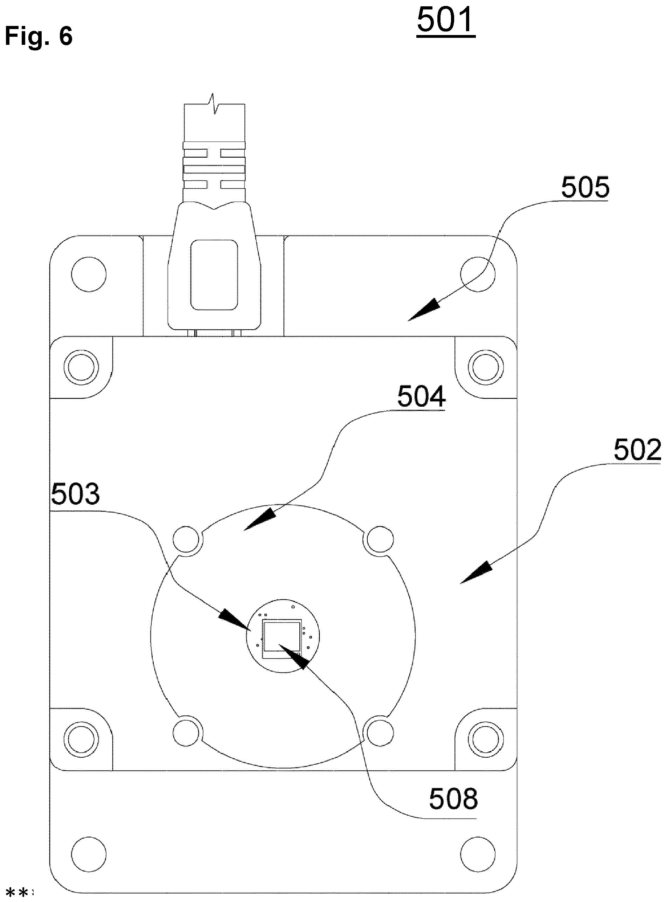

Fig. 6 shows a sensor unit 501 according to an embodiment of the invention in a closed state. In detail, the sensor unit 501 comprises a housing with an opening 502. The sensor unit 501 is aligned with the laser beam 401 emitted by the laser diode 304 such that the beam can pass through said the opening 502 of the housing.

In a preferred embodiment a transparent protective element 503 is provided on the housing for covering the opening 502. A clamping element 504 is configured to fasten the transparent protective element 503 to the housing in a removable manner to enable an exchange of said transparent protective element 503.

The sensor unit 501 according to this embodiment further comprises a backplate 505 connected to said housing and a printed circuit board 506 provided on said backplate 505.

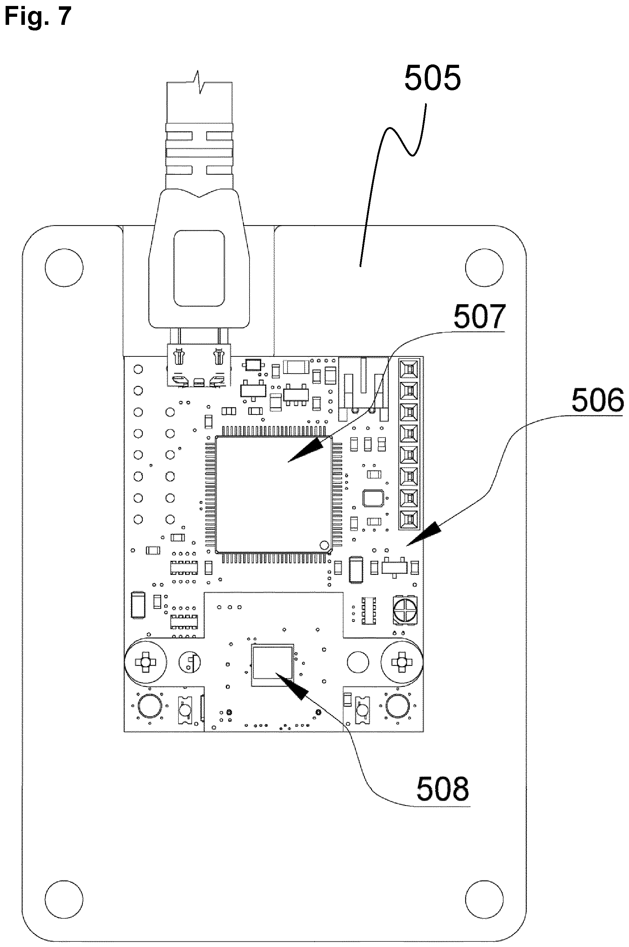

Fig. 7 shows a sensor unit according to an embodiment of the invention in an open state. The printed circuit board 506 comprises a controller 507 and an optical sensor unit 508, preferably a global shutter CMOS sensor.

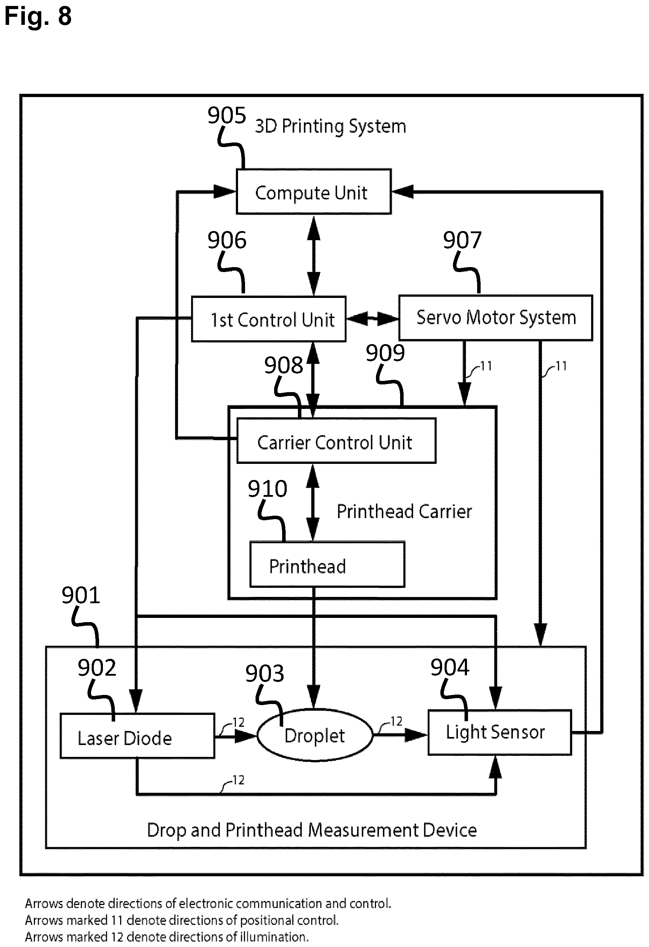

It is noted that in the embodiment of Fig. 7, the controller 507 comprises a local processing unit, in communication with the computing unit shown in Fig. 8. However, the processing unit may alternatively be implemented as an independent processing unit. Furthermore, it is noted that all processing entities are defined in terms of their function and not in terms of their physical implementation. In other words, one or more processing entities such as timing controllers, signal controllers, image processing and signal processing can be implemented in a single general processing means. The implementation can be in software or hardware or a combination of both.

In a preferred embodiment the optical sensor unit is a two-dimensional array of light-capturing cells configured to read out light data at a wavelength corresponding to a wavelength emitted by the laser diode. The light capturing cells are configured to detect a difference in monochrome light intensity and converting the analog readout data of the entire array simultaneously into at least a 10-bit digital signal per light-capturing cell.

The optical sensor unit 508 and the controller 507 are both functionally connected to each other. The sensor 508 is positioned orthogonally to the direction of the laser beam 401 emitted by the laser-diode 304 thus allowing for said laser beam to frontally and perpendicularly hit said CMOS sensor.

The laser diode preferably is configured to emit a light beam with wavelength roughly in the visible light frequency spectrum, more specifically a wavelength outside of the near visible

UV-light and infrared-light spectral ranges. The ejected material may be adversely affected by the absorption of UV-light or the material could experience an unwanted increase in temperature due to infrared light absorption.

More preferably the laser diode is configured to emit a wavelength with a margin of at least 150nm to the near visible UV-ranges, more specifically within a range of 550 nm to 750nm.

For an exemplary implementation of the invention, two laser diodes, LD1 and LD2, have been tested. The relevant parameters of said laser diodes are presented in Table 1:

**Table 1**

| **Diode Name** | **Center Wavelengt h in nm** | **M2 factor** | **BPP in mm mrad** | **Divergence angle in mrad** | **Beam Waist Radius in µm** | **Rayleigh Length in mm** | **Functional for applicatio n** |
|---|---|---|---|---|---|---|---|
| LD1 | 650 | 1.1 | 0.228 | 0.8 | 570 | 496 | Yes |
| LD2 | 650 | 1.3 | 0.269 | 0.8 | 673 | 420 | Yes |

In an embodiment of the invention, the material retention element 305 comprises an upper case element; a lower case element; a material pumping connector connecting at the lower surface of the lower case element and allowing for material to be pumped through via low pressure; and a straining element, provided between the upper and lower case element, allowing for liquid droplets 200 to be ejected by a printhead onto said straining element.

In a preferred embodiment of the invention, the laser beam has diameter greater than 2 mm and preferably greater or equal to 3 mm and an uncollimated beam divergence angle of less than 12 degrees, preferably 8 degrees, in a first direction and less than 30 degrees, preferably 22 degrees, in a second direction, which is perpendicular to said first direction. Furthermore, it is preferred that a collimating element is provided at the laser diode. Furthermore, the laser diode is operated in a pulsed mode.

It is noted that either a collimated or a non-collimated beam may be used. The use of a non-collimated beam needs to be corrected for in size related calculations. Collimated beams are thus preferred but not necessary.

The pulsing of the laser diode is controlled by a first controller unit and generally being synchronized to the droplet ejection via said first controller unit. Preferably the laser diode is turned on and off with regard to a trigger signal being sent to said first controller unit by a second controller unit.

The second controller unit is configured to control the droplet ejection of the one or more printheads, and to facilitating an ejection of a droplet from one or more material ejection orifices into the material retention element situated below the printhead.

As discussed before, the flight path of said droplets and the light beam are essentially overlapping at a first position and the pulsing of said beam is delayed in order to illuminate said droplet at the first position, such that an shadow of said droplet is projected onto the global shutter CMOS sensor.

In a preferred embodiment of the invention, the image is read out from the sensor globally. That is, the entire array of pixels present on the sensor is read out and saved at once. In a preferred embodiment of the invention, the pixel pitch of said CMOS sensor is less than 1/10th, and more preferred less than 1/30th of a droplet diameter length.

Droplet diameters typically can range from a 25 micrometer diameter to a 130 micrometer diameter. The preferred pixel pitch is 3 micrometer, but even up to 6 micrometer pixel pitches have been shown to be suitable for measuring average drop diameter ranges of around 40 to 80 micrometers with sufficient accuracy. This is, because of a slight beam divergence, which essentially increases the size of the droplet shadow on the sensor linearly, to allow for proper edge detection.

Further in a preferred embodiment of the invention the diameter and side length dimensions of said laser beam and CMOS sensor respectively corresponding to 100 to 30 times the diameter size of the drop diameter. The ejecting of a droplet and pulsing of the laser beam being done at a rate roughly corresponding to the readout time of said CMOS sensor or at a certain multiple interval of the readout time of said CMOS sensor.

The preferred frame-rate of the global CMOS sensor readouts is a frequency higher than 60 Hertz, preferably higher than 80 Hertz and more preferably higher than 120 Hertz and at a native pixel resolution.

The sensor unit is configured to detect the central interference pattern in at least an area of at least 0.015% of the sensor area. That is 0.015% corresponds to the smallest measured droplet size with an easily identifiable interference pattern. At a sensor resolution of 640x480 this results in a 7 by 7 pixel smallest drop resolution and a typical drop size resolution of around 17 by 17 pixels, corresponding to 0.094% of the area of the sensor.

The imaging data is transferred to a computing unit for analyzing the characteristics of the measured droplet. The measured characteristics may include one or more of: a droplet position, a droplet shape and droplet size of one or more droplets.

Said computing unit is configured to determine a deviation for each measured characteristic relating to a specific ejection orifice from a stored set of characteristics and to calculating an adjustment signal for the first controller unit to be send the printhead.

Thus, causing said printhead ejecting a second droplet to be measured by the sensor unit and subsequently being analyzed again in order to further adjust the ejection to until a threshold of certain ejection characteristics is reached.

In a preferred embodiment of the invention the drop shape is derived via an edge detection algorithm during an image data analysis process. Said edge detection algorithm corresponding to a so-called canny edge detection operator, in order to facilitate a digital representation of the droplet edge.

Said edge detection is further used for calculations of a center of mass, a diameter, a volume, a shape and a position of the droplet.

Furthermore, the image of the laser being projected onto the sensor is preferably further cleaned up via a process of mean image subtraction, in order to generate an output to be used in the edge detection process, whereby one or multiple images of the laser beam being pulsed one or more times are captured without an image of a droplet present on the sensor and a mean image is calculated from the image data. Said mean image data is subsequently subtracted from an image containing the image of a droplet, thereby removing any remnant constant image data projected onto the sensor via the laser beam.

In a preferred embodiment of the invention, the printhead carrier unit and/or printheads further have one or more referencing members, which can be positioned as to obfuscate the laser beam emitted by the laser-diode through a translation of the printhead carrier unit and/or the translation of the sensor unit.

Said obfuscations are measured and correlated with electronic motor driver data being sent via a controller unit during at least one of the translations, thus allowing for an accurate positional measurement of the printhead carrier unit in relation to the sensor unit and an accurate measurement of the positioning of the printheads within the printhead carrier unit.

The printhead position can subsequently be adjusted manually and/or automatically, to within a desired threshold for accurate system operation.

In a preferred embodiment of the invention, the computing unit is configured to determine the position of the printhead in the x-direction to be in alignment with a first position measurement, said position is communicated via the first control unit to the motion system.

The motion system is configured to provide referenced positioning data to the computing unit via the control unit and to translate the printhead carrier unit connected to said printhead.

The first position measurement is aligning the ejection orifices of said printhead to be situated directly above a laser beam with respect to said x-direction, when the direction of said laser beam corresponds to the primary y-direction.

The computing unit is further configured to send a signal to the printhead, via the first control unit and the carrier control unit, causing the printhead to eject a droplet of liquid material from a first ejection orifice. The signal is comprising information relating one or more parameters of the droplet ejection mechanism.

The carrier control unit is additionally in communication with the computing unit in order to ensure signal synchronization and to transmit data relating to the printhead.

The motion system is further configured to translate the optical measurement system in the z-direction. The translation is controlled by the computing unit and the motion system is further configured to provide referenced positioning data of the optical measurement system, to calculate an accurate distance between the ejection orifices of the printhead and the laser beam.

The computing unit is further configured to send a signal to the laser diode and the light sensor via the first control unit. Said signal comprises previously calculated information relating to a predetermined timing. The signal causes the laser diode to emit a pulse of laser light and causes the sensor to read out collected light data.

Said predetermined timing causes the pulsing and the readout of the laser beam and the light sensor to occur when the ejected droplet is positionally close to the center of the laser beam with respect to the x-z-plane. Thus, the droplet is casting an image onto the light sensor. The computing unit is configured to receive data from the light sensor.

Said received data allows the computing unit to determine one or more of following characteristics: the position of the measured droplet in the x-z-plane, the droplet size, the droplet shape and the number of secondary droplets present within a limited area around the primary droplet.

The measured characteristics are corresponding to one or more of the parameters of the droplet ejection mechanism. According to an embodiment of the invention said characteristics may be adjusted according to a data set present in the computing unit in order to produce a second droplet ejection and a second droplet measurement with a goal of transforming the measured characteristics of the second droplet to be measured in said second droplet measurement to be more in accordance of data representing an acceptable set of characteristics for the droplet ejection.

Said second measurement either succeeding in delivering data according to a threshold of acceptable characteristics or not. If this threshold is not met, then adjustments are repeated until the threshold of acceptable characteristics is met.

The signal sent to the printhead for a further ejection is computed in order to minimize a difference of the previous measurement data and the ideal measurement data by adjusting the signal to affect the parameters of the actuation according to their anticipated effect on the measurement data.

For example, an increase of voltage is strongly correlated with an increase in drop volume. If the threshold of a subsequent measurement is met, then the process is stopped for the measured nozzle and the next nozzle can be measured and adjusted until it is in accordance with the threshold. This continues until a required number of nozzles provide ejection characteristics in accordance with the threshold.

Fig. 8 shows a flow diagram of a measurement method according to an embodiment of the invention. In particular, the function interrelation between different functional units according to an embodiment of the invention is illustrated. As noted before, different functional units may be implemented in on physical unit, i.e. all or some control units may be combined and implemented in one general computing means.

The core system is the drop and printhead measurement device 901 comprising a laser diode 902 and a light sensor unit 904. The laser diode illuminates 12 the light sensor unit 904 and/or a droplet 903. The light sensor unit 904 is functionally connected to a processing unit or compute unit 905. The processing unit 905 is connected to a first control unit 906. The processing unit 905 is configured to process the sensor image detected by the light sensor unit 904. The first control unit 906 is connected to a servo motor system 907 for moving the printhead 910; connected to the laser diode 902 to control the timing of the illumination; and connected to a carrier control unit 908 in the printhead 910. The control unit 908 is connected to the printhead 910, which ejects the droplet.

Given the functional structure shown in Fig. 8, the skilled person realizes multiple possible feedback loops, which can be implemented according to embodiments of the invention. The measurement result outputted from the processing unit 905 can be used to control the servo motor system and/or the carrier control, i.e. ejection parameters. Furthermore, also the laser parameters may be feedback controlled.

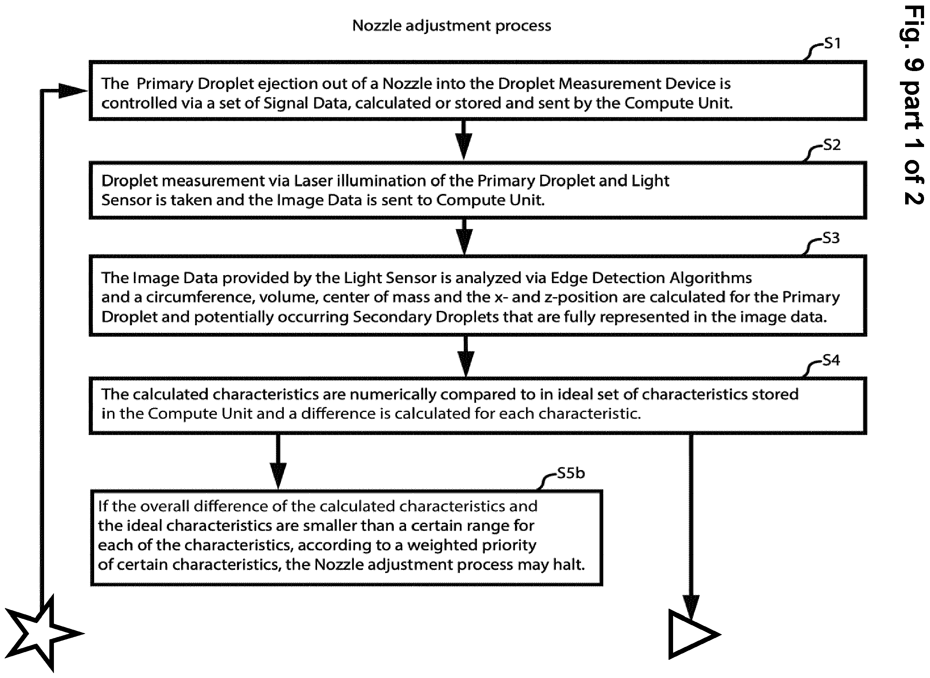

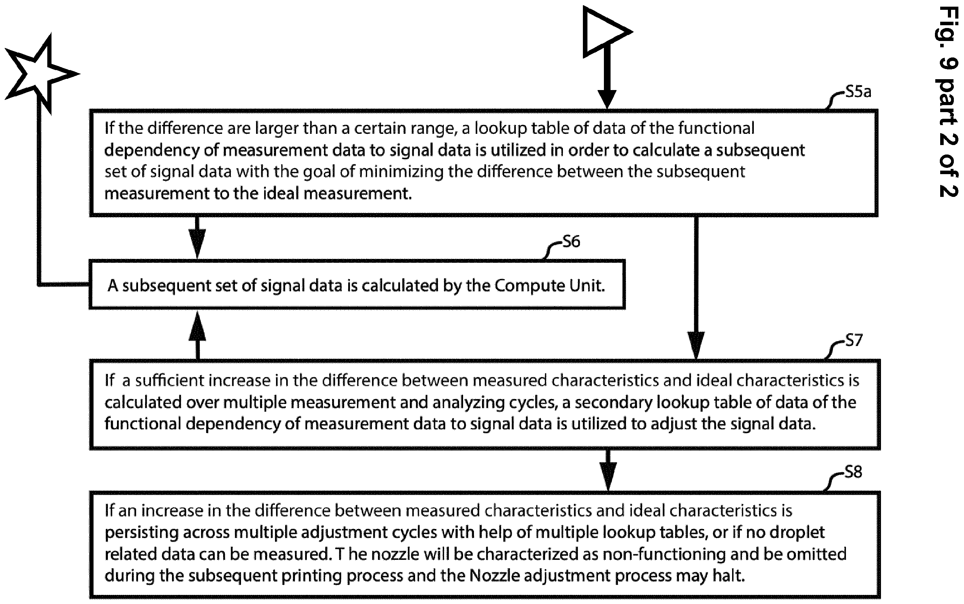

Fig. 9 shows a flow diagram of an optimization method according to an embodiment of the invention. In particular, a control loop for the system of Fig. 8 is detailed.

In step S1, a primary droplet ejection out of a nozzle into the droplet measurement device is controlled via a set of signal data, calculated or stored and sent by the processing unit.

In step S2, a droplet measurement is preformed via laser illumination of the primary droplet and an image is detected with the light sensor unit and sent to the processing unit.

In step S3, the image data provided by the light sensor unit is analyzed via edge detection algorithms and a circumference, volume, center of mass, and a x- and z-position of the droplet are calculated for the primary droplet and potentially occurring secondary droplets based on the image data.

In step S4, the calculated characteristics are numerically compared to a predetermined target set of characteristics stored in the processing unit and a difference is calculated for each characteristic.

In steps S5a and S5b the feedback is determined based on the calculated difference. In case of step S5a, if the difference is larger or equal than a certain value, a lookup table of data of the functional dependency of measurement data to signal data is utilized in order to calculate a set of signal data for the nozzle adjustment with the goal of minimizing the difference between the measurement to the target data.

In case of step S5b, if the overall difference of the calculated characteristics and the respective target is smaller than a certain predetermined value for the nozzle adjustment process is stopped. Additionally, or alternatively a weighted priority for a plurality of characteristics may be used as a stop criterion.

The measurement and the adjustment are repeated. In step S6, a subsequent set of signal data is calculated by the processing unit.

In step S7, if a sufficient change, i.e. increase or decrease, in the difference between measured a respective characteristic and target characteristics has been calculated over multiple measurement and analyzing cycles, a secondary lookup table of data of the functional dependency of measurement data to signal data is utilized to adjust the signal data.

In step S8, if a change, i.e. increase or decrease, in the difference between a respective measured characteristics and a target characteristic is persisting across multiple adjustment cycles with help of multiple lookup tables, or if no droplet related data can be measured. The nozzle is characterized as non-functioning and is omitted during the subsequent printing process and/or the nozzle adjustment process may end.

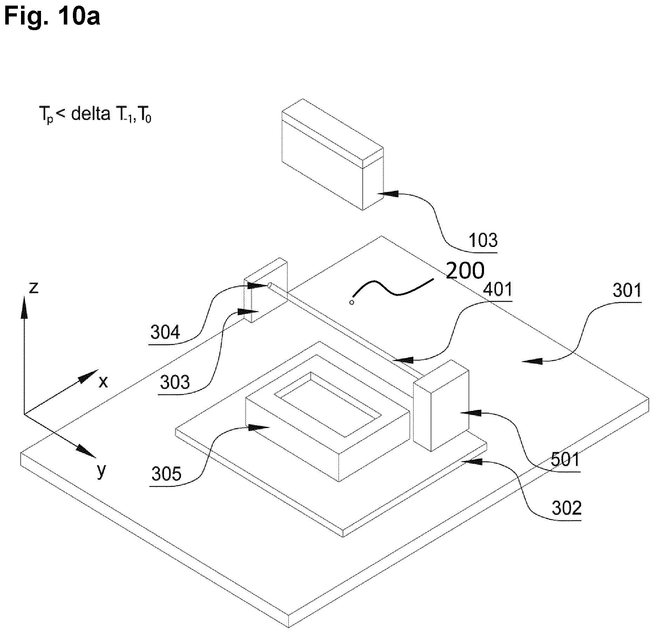

Figs. 10a to 10c show a time series of an explosive view of an optical measurement system according to an embodiment of the invention with a droplet above the light beam (a); the droplet in the light beam (b); and the droplet below the light beam (c). The figures show the same embodiment as in Fig. 3.

In Fig. 10a the droplet 200 is above the laser beam. This is the case for Tp < delta T₋₁,T₀. In other words, at times before the referenced zero time. However, this may also be the case, when the droplet arrives too late, see the above discussion of relative timing and z position.

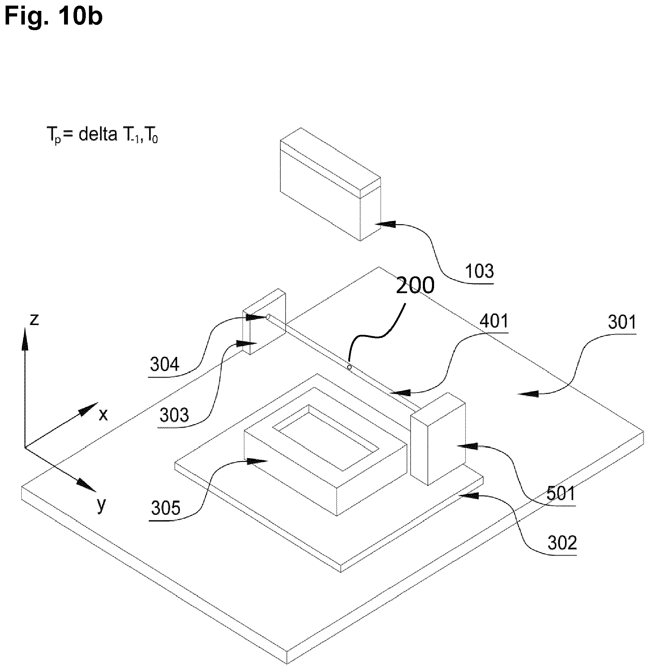

In Fig. 10b the droplet 200 is in the laser beam. This is the case for Tp = delta T₋₁,T₀. In other words, at times around referenced zero time.

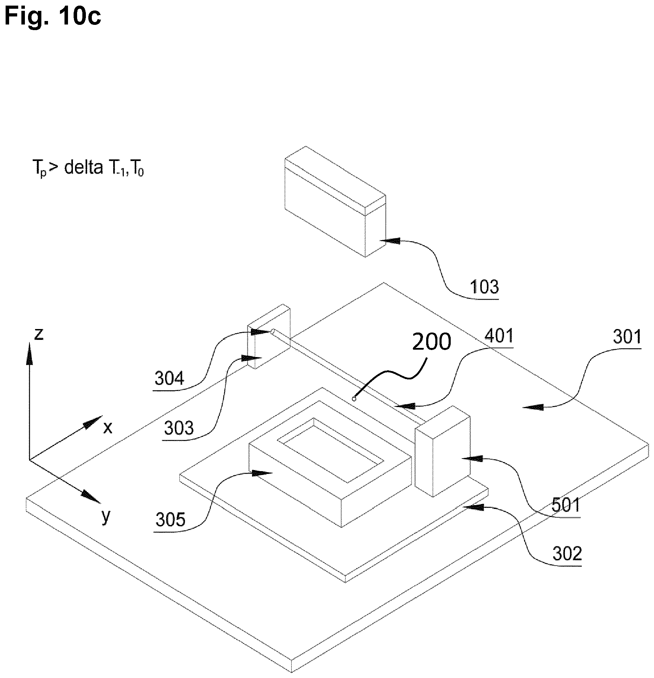

In Fig. 10c the droplet 200 is already below the laser beam. This is the case for Tp > delta T₋₁,T₀. In other words, at times after the referenced zero time. However, this may also be the case, when the droplet arrives too early, see the above discussion of relative timing and z position.

What has been described and illustrated hereinabove are embodiments of the invention along with some of variations. The terms, descriptions and figures used herein are set forth by way of illustration only and are not meant as limitations. Those skilled in the art will recognize that many variations are possible within the spirit and scope of the invention, which is intended to be defined by the following claims -and their equivalents- in which all terms are meant in their broadest reasonable sense unless otherwise indicated.

## Claims

1. A system for optical droplet analysis for a 3D printhead, the system comprising,
a light emission unit configured to emit a collimated light beam, wherein the light beam is directed to essentially cross a flight path of a droplet ejected from the 3D printhead;
a light detection unit positioned in the light beam at a position opposite to the light emission unit with regard to the flight path of the droplet, wherein the light detection unit is configured to directly detect an interference pattern caused by the droplet passing through the light beam in an area essentially corresponding to the cross-section of the light beam; and
a processing unit configured to process the detected interference pattern in order to estimate at least one parameter of the droplet.

2. The system according to claim 1,
wherein the processing unit is configured to estimate a center of the droplet based on a center of the central dark area of the interference pattern;
wherein the processing unit is configured to estimate a diameter of the droplet based on a diameter of the central dark area of the interference pattern; and/or
wherein the processing unit is configured to estimate a shape of the droplet based on a shape of the central dark area of the interference pattern.

3. The system according to claim 2, wherein the processing unit is configured to estimate of at least one of the center position, the diameter, and the shape based on an analysis of higher order interference effects.

4. The system according to any one of claims 1 to 3,
wherein light beam is a laser beam;
wherein the laser beam has a wavelength between 550 nm to 750nm, preferably between 600 nm and 690 nm;
wherein the laser beam has a diameter between 8 times and 170 times the droplet diameter; and/or
wherein the laser beam has a beam parameter product between 0.22 and 0.31 mm mrad with an respective M² value between 1 and 1.3.

5. The system according to any one of claims 1 to 4,
wherein the light detection unit is an array image sensor, preferably a CMOS image sensor, having a sensor area,
wherein the light detection unit has dimensions essentially corresponding to the dimensions of the light beam at the position of the light detection unit, and/or
wherein the light detection unit is configured to resolve a droplet in the size of an area of at least 0.015% of the sensor area.

6. The system according to any one of claims 1 to 5,
wherein the light source and/or the light detection unit are operated in a pulsed mode and are synchronized to the droplet ejection and/or to each other in order to capture one image of a single droplet.

7. The system according to any one of claims 1 to 6,
wherein at least one of the light emission unit and the light detection unit are mechanically referenceable against the 3D printhead; and/or
wherein the processing unit is configured to calculate a position of the 3D printhead relative to the light beam center.

8. The system according to any one of claims 1 to 7,
wherein the processing unit is configured to detect at least a central dark region in the detected interference pattern and to determine at least one of the center position, a diameter, and a shape of the central dark region; and
wherein the detection is preferably based on an edge detection algorithm, more preferably based on canny edge detection operator.

9. A system for optimization of a 3D printhead, comprising a 3D printhead with at least one adjustable ejection parameter and the system according to any one of claims 1 to 7 and a controller unit,
wherein the controller unit is configured to optimize the ejection parameter for a next droplet, preferably based on a predetermined target point, based on the determined droplet parameter of a past droplet.

10. A method for optical droplet analysis comprising the steps of:
operating a light emission unit to emit a collimated light beam, wherein the light beam is directed to essentially cross a flight path of a droplet ejected from a 3D printhead;
directly detecting with a light detection unit an interference pattern caused by the droplet passing through the light beam in an area essentially corresponding to the cross-section of the light beam, wherein the light detection unit is positioned in the light beam at a position opposite to the light emission unit with regard to the flight path of the droplet; and
processing with a processing unit the detected interference pattern in order to estimate at least one parameter of the droplet.

11. A 3D Printer with a system according to any one of claims 1 to 9 and configured to perform the method according to claim 10.
